# EUROPÄISCHE PATENTANMELDUNG

(11) **EP 3 310 114 A1**
(43) Veröffentlichungstag der Anmeldung: **18.04.2018**
(21) Anmeldenummer: 17001699.2
(22) Anmeldetag: 13.10.2017
(51) Int. Cl.: H04W 76/00

(54) **ERWEITERTER NOTRUF**

(30) Priorität: 14.10.2016 DE 102016012339
(71) Anmelder: Giesecke+Devrient Mobile Security GmbH, 81677 München (DE)
(72) Erfinder: KURTZ, Volker, 82418 Murnau d. Staffelsee (DE)

(57) **Zusammenfassung**

Die vorliegende Erfindung ist gerichtet auf ein Verfahren zum Absetzen eines erweiterten Notrufs, welches es ermöglicht, ein herkömmliches mobiles Endgerät bzw. ein Sicherheitselement für ein mobiles Endgerät derart aufzurüsten, dass mit geringem technischen Aufwand Benachrichtigungen an weitere Rettungsdienste bzw. Angehörige versendet werden können. Die vorliegende Erfindung ist ferner gerichtet auf ein entsprechend eingerichtetes Sicherheitselement bzw. ein mobiles Endgerät aufweisend das Sicherheitselement. Ferner wird ein Notrufsystem zum Absetzen eines erweiterten Notrufs vorgeschlagen sowie ein Computerprogrammprodukt mit Steuerbefehlen, welche das vorgeschlagene Verfahren implementieren bzw. die vorgeschlagenen Vorrichtungen betreiben.

## Beschreibung

Die vorliegende Erfindung ist gerichtet auf ein Verfahren zum Absetzen eines erweiterten Notrufs, welches es ermöglicht, ein herkömmliches mobiles Endgerät bzw. ein Sicherheitselement für ein mobiles Endgerät derart aufzurüsten, dass mit geringem technischen Aufwand Benachrichtigungen an weitere Rettungsdienste bzw. Angehörige versendet werden können. Die vorliegende Erfindung ist ferner gerichtet auf ein entsprechend eingerichtetes Sicherheitselement bzw. ein mobiles Endgerät aufweisend das Sicherheitselement. Ferner wird ein Notrufsystem zum Absetzen eines erweiterten Notrufs vorgeschlagen sowie ein Computerprogrammprodukt mit Steuerbefehlen, welche das vorgeschlagene Verfahren implementieren bzw. die vorgeschlagenen Vorrichtungen betreiben.

DE 10 2014 008 267 A1 zeigt ein Verfahren zum Verwalten einer Vielzahl von Subskriptionsprofilen auf einem Sicherheitselement eines Endgeräts, wobei die Subskriptionsprofile wenigstens ein Standard-Subskriptionsprofil zum Einbuchen des Sicherheitselements in ein Mobilfunknetzwerk und zum Nutzen von Diensten dieses Mobilfunknetzwerks und ein eCall-Subskriptionsprofil umfassen, mittels dem ein automatischer Notruf getätigt werden kann.

DE 10 2008 044 929 A1 zeigt ein Verfahren zum Betrieb eines zellularen Mobilfunknetzes und beschreibt hierbei insbesondere eine sogenannte Whitelist im Kontext von Notrufen.

DE 19520632 A1 zeigt ein Verfahren zum Rufen eines Teilnehmers über ein Mobilfunknetzwerk, wobei der Aufenthaltsort einer rufenden Mobilstation zu einer Vermittlungsstelle des Mobilfunknetzes übertragen wird, wobei eine dem Aufenthaltsort der rufenden Mobilstation zugeordnete Ortsinformation zum gerufenen Teilnehmer übertragen wird.

DE 10 2012 025 085 A1 zeigt ein Teilnehmeridentitätsmodul, welches zu jedem Zeitpunkt Notrufidentitätsdaten aufweist, um das Absetzen eines Notrufs über das Endgerät zu ermöglichen.

Bekannt ist es, manuell oder automatisiert, einen Notruf abzusetzen, welcher priorisiert über ein Mobilfunknetz an einen Dienstleister übermittelt wird. Hierbei kann es sich um einen staatlichen Dienstleister oder aber auch um einen privaten Dienstleister, beispielsweise einen Automobilclub, handeln. Hierbei ist es möglich, dass ein Telekommunikationsmodul beispielsweise in einem Fahrzeug verbaut wird, welches in Abhängigkeit einer Sensorinformation selbsttätig einen Alarm auslöst. Somit kann beispielsweise ein Unfall erkannt werden, und die Telekommunikationseinheit des Fahrzeugs kann einen Notruf an eine Zentrale des Autoherstellers absetzen. Der Autohersteller kann dann entsprechend Sicherheitskräfte herbeirufen.

Um ein verunfalltes Fahrzeug zu lokalisieren, ist es bekannt, Ortsinformationen in das Notrufsignal einzucodieren und dies mitsamt dem Notruf zu übermitteln. Somit können Rettungskräfte direkt an den Ort des Unfalls geleitet werden.

Gemäß herkömmlicher Verfahren können SIM-Karten bereits mit der Auslieferung mit Notrufnummern versehen werden. So ist es bekannt, auf eine SIM-Karte von einem Hersteller bereits einen Automobilclub abzuspeichern, so dass der Endkunde mittels eines Synonyms indirekt auswählt, welche Notrufnummer telefonisch angewählt werden soll.

Hierbei ist es besonders nachteilig, dass gemäß herkömmlichen Verfahren typischerweise nur eine Notrufnummer angewählt wird. So verstreicht gemäß dem Stand der Technik wertvolle Zeit dadurch, dass zuerst eine Servicestelle kontaktiert wird, die dann beispielsweise nach einem Gespräch mit dem verunfallten Fahrer weitere Rettungskräfte alarmiert. Weiterhin ist es nachteilig, dass lediglich eine Priorisierung bezüglich herkömmlicher Rettungsdienste, wie beispielsweise Polizei oder Feuerwehr, besteht. Somit wird stets der Rettungsdienst priorisiert verständigt, während weitere Servicekräfte erst verzögert alarmiert werden. Somit wird zwar stets gemäß dem Stand der Technik die Feuerwehr oder ein Notarzt priorisiert alarmiert, da jedoch typischerweise auch ein Abschleppdienst oder Angehörige informiert werden sollen, verstreicht hierbei wieder wertvolle Zeit. Ferner hat der Notrufende keinerlei Einfluss darauf, dass weitere Teilnehmer in einer bevorzugten Art kontaktiert werden und beispielsweise Notrufprofile derart auf seinem mobilen Endgerät abzuspeichern.

Somit ist es eine Aufgabe der vorliegenden Erfindung, ein Verfahren zum automatisierten Absetzen eines erweiterten Notrufs bereitzustellen, welches derart automatisiert eine Mehrzahl von Kontaktadressen anspricht, dass in schneller Art und Weise und mit geringem technischen Aufwand umfangreich Hilfe geholt wird bzw. Servicekräfte benachrichtigt werden. Es ist ferner eine Aufgabe der vorliegenden Erfindung, ein entsprechend eingerichtetes Sicherheitselement bzw. ein mobiles Endgerät bereitzustellen. Ferner ist es eine Aufgabe der vorliegenden Erfindung, ein Notrufsystem zum Absetzen eines erweiterten Notrufs vorzuschlagen. Ferner ist es eine Aufgabe, ein Computerprogrammprodukt mit Steuerbefehlen vorzuschlagen, welche das Verfahren implementieren bzw. die Vorrichtungen betreiben.

Die Aufgabe wird gelöst durch ein Verfahren zum Absetzen eines erweiterten Notrufs mit den Merkmalen des Patentanspruchs 1. Weitere vorteilhafte Ausgestaltungen sind in den Unteransprüchen angegeben.

Demgemäß wird ein Verfahren zum Absetzen eines erweiterten Notrufs vorgeschlagen, welches die folgenden Schritte aufweist, nämlich ein Bereitstellen einer ersten Liste und einer zweiten Liste, jeweils aufweisend Kontaktadressen, wobei jede Kontaktadresse aus der ersten Liste mit mindestens einer Kontaktadresse aus der zweiten Liste verknüpft wird und ein Kontaktieren der mindestens einen Kontaktadresse aus der zweiten Liste in Abhängigkeit eines Kontaktierens der verknüpften Kontaktadresse aus der ersten Liste erfolgt.

Ein Absetzen eines erweiterten Notrufs kann beispielsweise vollautomatisiert derart erfolgen, dass Einheiten aus einem Fahrzeug eine Notsituation erkennen. Hierbei kann es sich um Auffahrsensoren handeln, die in Abhängigkeit eines beaufschlagten Drucks einen Unfall erkennen. Ein Notruf unterscheidet sich von einem herkömmlichen Telefonanruf bereits dadurch, dass dieser spezifikationsgemäß in einem Mobilfunknetz priorisiert vermittelt wird. So wird in den entsprechenden Kommunikationsprotokollen ein eigenes Flag gesetzt, welches anzeigt, dass es sich beispielsweise bei einem Telefonanruf um einen Notruf handelt. Ein Notruf gemäß der vorliegenden Erfindung kann jedoch auch ein Übertragen von Daten über ein Telekommunikationsnetzwerk umfassen. So ist es möglich, quasi beliebige Daten mit dem Notruf zu versehen. Erfindungsgemäß ist es jedoch nicht notwendig, dass das Versenden der Daten mittels mobilen Endgeräts bzw. einer Telekommunikationseinheit in einem Fahrzeug des Notrufenden erfolgen muss.

Erfindungsgemäß ist es vielmehr so, dass auch ein entfernter Dienstanbieter einen entsprechenden Erkennungsdienst anbieten kann, beispielsweise in Form eines Servers, der identifiziert, dass ein Notruf abgesetzt wurde. Dies kann der Server, wie es oben bereits beschrieben wurde, daran erkennen, dass eine Notrufinformation, wie beispielsweise ein Flag, vorliegt. Somit kann der Server ein hinterlegtes Notrufprofil der erkannten Nummer, welche einen Notruf absetzt, laden. In einem solchen Notrufprofil kann hinterlegt werden, welche weiteren Teilnehmer zu verständigen sind. Somit stellt sich erfindungsgemäß der Vorteil ein, dass nicht notwendigerweise technische Änderungen an dem mobilen Endgerät vorgenommen werden müssen.

Um zu erkennen, welche weiteren Dienste benachrichtigt werden müssen, ist es erfindungsgemäß vorgesehen, dass eine erste und eine zweite Liste von Kontaktadressen vorliegt. Die erste Liste von Kontaktadressen kann hierbei Notrufnummern von primären Rettungsdiensten, wie beispielsweise der Polizei oder der Feuerwehr aufweisen. Hierzu ist es möglich, dass diese erste Liste von Kontaktadressen von einem Benutzer des mobilen Endgeräts selbst spezifiziert wird, oder aber dass ein Dienstanbieter, beispielsweise ein Telekommunikationsnetzbetreiber, diese Liste bereitstellt. Somit ist es auch möglich, diese Liste dynamisch zu aktualisieren und beispielsweise bei einem Auslandsaufenthalt zu aktualisieren, welche Nummer einem primären Rettungsdienst entspricht. Danach kann der Endbenutzer festlegen, welche sekundären Kontakte im Fall des jeweiligen Notrufs kontaktiert werden sollen. So kann der Benutzer beispielsweise spezifizieren, dass, falls aus der ersten Liste ein Polizeinotruf getätigt wird, in der zweiten Liste hinterlegt wird, dass mitsamt einem Polizeinotruf auch gleich Nachbarn verständigt werden. Hierzu können weitere Ortsinformationen des Notrufenden hinterlegt werden. Befindet sich der Notrufende beispielsweise in seiner Privatwohnung, so kann hinterlegt werden, dass Nachbarn dieser Privatwohnung kontaktiert werden, oder aber er befindet sich an einem Arbeitsplatz. Somit können Arbeitskollegen in der zweiten Liste abgespeichert werden und im Falle eines Polizeirufs verständigt werden.

Wird beispielsweise in der ersten Liste ein Automobilclub als mögliche Kontaktadresse hinterlegt, so ist es möglich, mit dieser Kontaktadresse in der zweiten Liste gleich einen Abschleppdienst oder eine Versicherungsnummer zu hinterlegen. Verunfallt somit der Notrufende, so muss er sich nicht um die Verständigung des Abschleppdienstes oder der Versicherung kümmern, sondern vielmehr wählt er lediglich eine einzige Nummer, beispielsweise des Automobilclubs, und bekommt die vorab spezifizierte Hilfe. Der Fachmann erkennt hierbei weitere Beispiele, wie sie solche Notrufprofile einstellen lassen.

Die Zuordnung der Kontaktadressen der ersten Liste zu den Kontaktadressen der zweiten Liste kann mittels eines Verknüpfens herstellerseitig oder von dem Endbenutzer vorgenommen werden. So ist es erfindungsgemäß möglich, einer Kontaktadresse aus der ersten Liste beliebig viele Kontakte aus der zweiten Liste zuzuordnen bzw. diese zu verknüpfen. So kann es sich bei der zweiten Liste um eine bereits bestehende Kontaktliste handeln, wie sie typischerweise auf Smartphones bzw. SIM-Karten hinterlegt sind. So kann der Endbenutzer auch die Art der Kontaktierung der weiteren Kontaktadressen spezifizieren. Wird beispielsweise gemäß der ersten Liste ein Polizeinotruf abgesetzt, so kann einem ersten Nachbarn eine SMS zugeschickt werden, die den Nachbarn darüber aufklärt, dass die Polizei gerufen wurde. Einem weiteren Nachbarn kann eine E-Mail mit entsprechender Information zugehen. Somit ist es erfindungsgemäß möglich, einer primären Notrufnummer aus der ersten Liste eine beliebige Anzahl von Kontaktadressen mitsamt Kontaktierungsart aus der zweiten Liste zuzuordnen. Ferner ist es möglich, bereits Nachrichten zu hinterlegen, welche im Fall eines Notrufs abgesendet werden.

Hierbei ist es möglich, die entsprechenden Steuerbefehle bzw. die Notrufkonfiguration direkt auf dem mobilen Endgerät oder auf einem Sicherheitselement des mobilen Endgeräts zu hinterlegen. Ferner ist es jedoch auch möglich, die entsprechende Steuerungslogik mitsamt Steuerungsdaten auf einem entfernt angeordneten Server zu hinterlegen. So kann die vorliegende Erfindung derart implementiert werden, dass Steuerbefehle auf ein Smartphone geladen werden, welche Zugriff auf entsprechende Sensoreinheiten erhalten. Es ist jedoch auch möglich, einen Server derart einzusetzen, dass dieser einen Dienst anbietet, der erkennt, dass ein Notruf abgesetzt wurde und die entsprechenden Verfahrensschritte veranlasst. Während eine Umsetzung auf einem mobilen Endgerät wenig technischen Aufwand bedeutet und dem Benutzer die volle Kontrolle über seine Daten belässt, so ist es besonders vorteilhaft, entsprechende Steuerbefehle und Daten auf einem Server abzulegen, der auch die entsprechenden Verfahrensschritte ausführen kann, falls das mobile Endgerät nach dem Absetzen des Notrufs zerstört wird. Ferner ist es auch möglich, dass das mobile Endgerät im Zusammenwirken mit einem Server die erfindungsgemäßen Verfahrensschritte bereitstellt und ausführt. Somit erfolgt eine verteilte Abarbeitung der Steuerbefehle.

Ein Kontaktieren einer Kontaktadresse aus der ersten Liste kann gemäß der vorliegenden Erfindung als da Absetzen eines Notrufs bezeichnet werden. Ein Notruf in einem Mobilfunknetz ist ein privilegierter Ruf, der dem Mobilfunknetz von Seiten des Endgeräts signalisiert wird. Auch wenn der Teilnehmer eine Notrufnummer im Endgerät wählt, wird über das Mobilfunknetz keine Rufnummer gewählt. Stattdessen existiert auf Signalisierungsebene ein standardisiertes Verfahren, einen solchen Notrufwunsch direkt dem Netzwerk zu signalisieren. Das Netzwerk sorgt dann für das privilegierte Routing zur nächsten zuständigen Rettungsleitstelle und stellt diese zusätzliche Information wie Rufnummer, Cell-ID und dergleichen zur Verfügung. Bei Notrufen in einem Mobilfunksystem kann es sich um einen Notruf gemäß der technischen Spezifikation ETSI TS 24.008 handeln, der prinzipiell zwischen mehreren Arten von Notrufen unterscheidet. Dies kann beispielsweise ein manueller oder ein automatischer Notruf, beispielsweise ein eCall, sein. Dieser kann von einer fest verbauten Notrufeinrichtung in einem Kraftfahrzeug oder von einem Telefon aus versendet werden.

Ein eCall als eine Sonderform des Notrufs in einem Mobilfunksystem wird durch ein sogenanntes eCall-Flag dem Mobilfunknetzwerk als ein aus einem Kraftfahrzeug stammender Notruf angezeigt. Durch das eCall-Flag ist der Netzwerkbetreiber in der Lage, diesen eCall der richtigen Rettungsleitstelle zuzuführen, die nicht identisch mit der Rettungsleitstelle für einen normalen Notruf sein muss. Mit einem eCall werden neben einer Sprachübertragung vor allen auch Daten an die Rettungsleitstelle übertragen, insbesondere die GPS-Position, die aktuelle Zeit, die GPS-Trackingrichtung sowie elementare Teile der Fahrzeuggestellnummer. Durch diese eCalls kann im Mobilfunknetz zwischen einem automatisierten Notruf, dem eCall, und einem klassischen Notruf, beispielsweise durch einen Menschen initiiert, unterschieden werden. Im Sinne der vorliegenden Erfindung werden beide Alternativen unter dem Begriff Notruf zusammengefasst. Beispielsweise kann ein solcher Notruf mittels eines Anwählens einer Kontaktadresse der ersten Liste stattfinden.

Gemäß einem Aspekt der vorliegenden Erfindung erfolgt das Kontaktieren der mindestens einen Kontaktadresse aus der zweiten Liste vor, während oder nach einem Kontaktieren der verknüpften Kontaktadresse aus der ersten Liste. Dies hat den Vorteil, dass in Abhängigkeit des jeweiligen Notrufs eine beliebige Reihenfolge des Kontaktierens der mindestens einen zweiten Kontaktadresse erfolgen kann. So ist es beispielsweise möglich, dass ein Smartphone eingerichtet ist, während einem Telefonat bereits eine SMS bzw. eine E-Mail an einen weiteren Adressaten zu versenden. Somit ist es möglich, dass, während der Notruf, also das Kontaktieren eines Adressaten aus der ersten Liste, bereits gleichzeitig ein Kontaktieren von weiteren Empfängern aus der zweiten Liste erfolgt. Auch kann es vorteilhaft sein, erst das Kontaktieren einer Notrufdienststelle, welche beispielsweise in der ersten Liste abgespeichert ist, abzuwarten, und dann erst die Sekundärkontakte aus der zweiten Liste zu alarmieren. Somit wird erfindungsgemäß verhindert, dass das Alarmieren der eigentlichen primären Rettungskräfte aus der ersten Liste nicht verzögert bzw. verhindert wird. Somit kann also eine Hierarchie auf den einzelnen Kontakten der jeweiligen Listen definiert werden.

Gemäß einem weiteren Aspekt der vorliegenden Erfindung liegen die Kontaktadressen jeweils als eine Telefonnummer, eine E-Mail-Adresse, eine URL, eine IP-Adresse, eine Internet-Adresse, eine Endgeräteidentifikation, eine Teilnehmeridentifikation, eine Applikationsidentifikation, eine Anschrift und/ oder ein Synonym vor. Dies hat den Vorteil, dass die einzelnen Adressen unterschiedlicher Art sein können und insbesondere, dass beispielsweise eine erste Kontaktadresse mittels eines Telefonanrufs und eine zweite Kontaktadresse mittels einer SMS benachrichtigt werden kann. Somit kann der Endgerätebenutzer bzw. der Hersteller spezifizieren, in welcher Art und Weise die einzelnen Kontaktadressen angesprochen werden sollen. So kann beispielsweise eine natürliche Person eine Telefonnummer, eine E-Mail-Adresse sowie eine Handynummer aufweisen, wobei festzulegen ist, in welcher Art und Weise diese natürliche Person kontaktiert wird, falls eine bestimmte Nummer aus der ersten Liste adressiert wird.

Gemäß einem weiteren Aspekt der vorliegenden Erfindung wird die erste Liste direkt oder indirekt auf einem mobilen Endgerät abgespeichert. Dies hat den Vorteil, dass ein interner Speicher des mobilen Endgeräts, beispielsweise eines Smartphones, Verwendung finden kann, oder aber auch dass die Liste, sei es nun die erste Liste oder die zweite Liste, auf einer SIM-Karte, beispielsweise einer UICC oder einer eUICC, abgespeichert wird. Somit wird sichergestellt, dass die erste Liste stets verfügbar ist, auch wenn gerade keine Telekommunikationsschnittstelle verfügbar ist. So kann es vorkommen, dass ein Notruf in der Nähe eines Funklochs abgesetzt wird, wobei lediglich eine schmalbandige Verbindung zur Verfügung steht. Somit kann der Notruf abgesetzt werden, ohne dass die erste Liste von einem entfernten Dienstanbieter bereitgestellt werden muss.

Gemäß einem weiteren Aspekt der vorliegenden Erfindung wird die erste Liste von einem bezüglich eines kontaktierenden Endgeräts entfernten Anbieters bereitgestellt und/ oder gewartet. Dies hat den Vorteil, dass die erste Liste beispielsweise von einem Telekommunikationsdienstanbieter mittels eines entfernten Servers an das mobile Endgerät bereitstellen kann und im Bedarfsfall die Liste auch aktualisieren kann. So können primäre Notrufnummern an ein mobiles Endgerät übermittelt werden und beispielsweise bei einem Verlassen eines Geltungsbereichs einer Notrufnummer eine neue Notrufnummer zur Verfügung gestellt werden. So wird sichergestellt, dass der Endbenutzer stets in dem Land, in dem er sich mitsamt seinem mobilen Endgerät aufhält, die richtige Notrufnummer zur Verfügung hat. Auch ist es möglich, dass private Dienstanbieter einen solchen Service bereitstellen, und dass der Kunde somit den Dienstanbieter wechseln kann und hierbei einen neuen Dienstanbieter als Kontaktadresse übermittelt bekommt. Somit kann sich dieser Aspekt auch auf die zweite Liste der Kontaktadressen beziehen.

Gemäß einem weiteren Aspekt der vorliegenden Erfindung umfasst ein Kontaktieren ein Übersenden einer vorgefertigten Nachricht, ein Übersenden einer eingegebenen Nachricht, ein Übersenden eines Notrufsignals, ein Anrufen eines Teilnehmers, ein Aufrufen einer Internetadresse, ein Ausführen eines eCalls und/oder eine Benachrichtigung mittels einer Kontaktadresse. Dies hat den Vorteil, dass sowohl das Kontaktieren der Kontaktadressen aus der ersten Liste als auch das Kontaktieren der Kontaktadressen aus der zweiten Liste mittels jeglicher, allgemein bekannter Verfahren durchgeführt werden kann, wobei es jedoch erfindungsgemäß besonders vorteilhaft ist, dass diese Vorgänge kombiniert und vordefiniert ausgeführt werden können. So ist es erfindungsgemäß möglich, dass die einzelnen Arten des Kontaktierens von einem Benutzer bzw. einem Hersteller sinnvoll ausgewählt werden und beispielsweise auf dem mobilen Endgerät, dem Sicherheitselement oder auf einem Server hinterlegt werden. Hierbei ist es auch möglich, ein verteiltes Profil anzulegen, welches sowohl lokal als auch auf einem entfernten Datenspeicher abgelegt wird.

Gemäß einem weiteren Aspekt der vorliegenden Erfindung sieht bei einem Kontaktieren der Kontaktadresse aus der ersten Liste mittels eines Endgeräts ein entfernter Dienst in der zweiten Liste nach, ob mit der ersten Kontaktadresse mindestens eine zweite Kontaktadresse in der zweiten Liste verknüpft ist. Dies hat den Vorteil, dass herkömmliche mobile Endgeräte typischerweise lediglich über eine einzige Liste, also einen Telefonspeicher, verfügen und dieser somit nicht nachgerüstet werden kann. Vielmehr ist es erfindungsgemäß möglich, dass ein Endbenutzer einen primären Notruf aus der ersten, lokalen Liste auf seinem Endgerät auswählt. Dies kann ein Dienstanbieter mittels eines entfernt angeordneten Servers, der mit einer Basisstation kommuniziert, erkennen. Somit wird entfernt von dem mobilen Endgerät erkannt, dass ein Absetzen eines Notrufs erfolgt, ohne dass hier das mobile Endgerät eine zweite Liste von Kontaktadressen vorhalten muss. Da gemäß herkömmlicher Standards Notrufe beispielsweise durch einen Flag gekennzeichnet sind, ist es dem Dienstanbieter möglich, Notrufe von herkömmlichen Telefonaten bzw. Datenübertragungen zu unterscheiden. Somit kann eine entfernte Einheit entsprechend einen Notruf erkennen und aus der zweiten Liste von Kontaktadressen entsprechende Auswahlen treffen, die kontaktiert werden.

Gemäß einem weiteren Aspekt der vorliegenden Erfindung kontaktiert der entfernte Dienst die mindestens eine verknüpfte Kontaktadresse aus der zweiten Liste. Dies hat den Vorteil, dass die Kontaktierungen der Adressen aus der zweiten Liste direkt und unmittelbar von einem entfernt angeordneten Server bzw. einem Dienst ausgeführt werden, ohne dass hier wertvolle Zeit verstreicht. Da bei einem Unfall ein mobiles Endgerät zerstört werden kann, muss dieses mobile Endgerät lediglich den Notruf absetzen, und die weiteren Kontaktadressen werden dann von einem entfernt angeordneten Dienst kontaktiert.

Gemäß einem weiteren Aspekt der vorliegenden Erfindung wird eine Verknüpfungsliste bereitgestellt, die beschreibt, wie auf ein Kontaktieren einer Kontaktadresse aus der ersten Liste ein Kontaktieren mindestens einer Kontaktadresse aus der zweiten Liste erfolgt. Dies hat den Vorteil, dass eine solche Verknüpfungsliste einen Dienst bereitstellt, der erkennen kann, welcher Notruf gewählt wurde und hierbei aus einer Verknüpfungstabelle entnimmt, welche weiteren Kontakte zu alarmieren sind. So kann der entfernte Dienst von einem Netzwerkbetreiber bereitgestellt werden, wobei eine ausführende Einheit mit den Netzwerkkomponenten des Dienstanbieters kommuniziert. So kann diese Einheit feststellen, welche Notrufnummer gewählt wurde und eben selbsttätig die weiteren Kontakte alarmieren.

Gemäß einem weiteren Aspekt der vorliegenden Erfindung ist mit einem Kontaktieren einer Kontaktadresse ein Ausführen weiterer Steuerbefehle verknüpft. Dies hat den Vorteil, dass beispielsweise in einem Automobil weitere Sicherheitsfunktionen aktiviert werden können. So kann beispielsweise, falls ein Notruf abgesetzt wurde, stets die Außenbeleuchtung sowie die Innenbeleuchtung aktiviert werden. So kann beispielsweise ein bestimmtes Signal spezifiziert werden, welches angibt, welches Auto den Notruf abgesetzt hat. Ist beispielsweise bei einem Unfall mit mehreren Kraftfahrzeugen ein Auto besonders beschädigt, oder es ergibt sich eine akute Gefahrenquelle, wie beispielsweise ein Ausbruch von Feuer, so kann ein weiterer Steuerbefehl ein bestimmtes Blinkmuster veranlassen. Ferner ist es möglich, weitere Kommunikationsschnittstellen anzusprechen, welche einen Ortungsdienst betreiben. Hierbei kann es sich beispielsweise um dass bekannte ERA Glonass handeln. Gemäß diesem Standard sind weitere Steuerbefehle bekannt, die ein Übertragen von Ortsinformation und weiterer Information beinhalten.

Die Aufgabe wird auch gelöst durch ein Sicherheitselement mit Steuerbefehlen, welche das vorgeschlagene Verfahren implementieren. So kann es sich bei dem Sicherheitselement um eine SIM-Karte bzw. um ein UICC oder ein eUICC handeln. Somit umfasst das Sicherheitselement Steuerbefehle, die die Verfahrensschritte wie bereits beschrieben veranlassen.

Die Aufgabe wird auch gelöst durch ein mobiles Endgerät zum Absetzen eines erweiterten Notrufs, welches die Verfahrensschritte, wie sie bereits beschrieben wurden, umsetzt bzw. abspeichert. So lässt sich das vorgeschlagene Verfahren im Wesentlichen von einem mobilen Endgerät ausführen, welches sowohl die erste als auch die zweite Liste von Kontaktadressen bereithält und entsprechende Kontakteinträge kontaktiert.

Die Aufgabe wird auch gelöst durch ein Notrufsystem zum Absetzen eines erweiterten Notrufs, mit einer Bereitstellungseinheit eingerichtet zum Bereitstellen einer ersten Liste und einer zweiten Liste jeweils aufweisend Kontaktadressen, wobei jede Kontaktadresse aus der ersten Liste mit mindestens einer Kontaktadresse aus der zweiten Liste verknüpft ist, und einer Kontakteinheit eingerichtet zum Kontaktieren der mindestens einen Kontaktadresse aus der zweiten Liste in Abhängigkeit eines Kontaktierens der verknüpften Kontaktadresse aus der ersten Liste.

Wie bereits beschrieben, kann das vorgeschlagene Notrufsystem derart verteilt implementiert werden, dass zumindest einige Verfahrensschritte von einem mobilen Endgerät ausgeführt werden und weitere Verfahrensschritte von einem entfernt angeordneten Dienst, beispielsweise einem Server. Insbesondere wurden bereits vorteilhafte Aspekte einer solchen Verteilung beschrieben.

Die Aufgabe wird auch gelöst durch ein Computerprogrammprodukt mit Steuerbefehlen, welche das vorgeschlagene Verfahren implementieren bzw. die vorgeschlagenen Vorrichtungen betreiben.

Hierbei ist es besonders vorteilhaft, dass die vorgeschlagenen Verfahrensschritte auch als strukturelle Merkmale umgesetzt werden können und somit die erfindungsgemäßen Vorteile des vorgeschlagenen Verfahrens auch auf die vorgeschlagenen Vorrichtungen anwendbar sind. So erkennt der Fachmann beispielsweise, dass das vorgeschlagene Verfahren mittels des mobilen Endgeräts bzw. des Notrufsystems umgesetzt werden kann bzw. dass das mobile Endgerät sowie das Notrufsystem das vorgeschlagene Verfahren ausführen können. Zudem kann es sich bei dem Computerprogrammprodukt auch um ein verteiltes Computerprogrammprodukt handeln, welches Steuerbefehle aufweist, welche entweder auf einem mobilen Endgerät oder einer Netzwerkeinheit ausgeführt werden.

Weitere vorteilhafte Ausgestaltungen werden anhand der beigefügten Figuren näher erläutert. Es zeigt:
- Fig. 1:: ein schematisches Diagramm eines Notrufsystems zum Absetzen eines erweiterten Notrufs gemäß einem Aspekt der vorliegenden Erfindung; und
- Fig. 2:: ein Ablaufdiagramm eines Verfahrens zum Absetzen eines erweiterten Notrufs gemäß einem weiteren Aspekt der vorliegenden Erfindung.

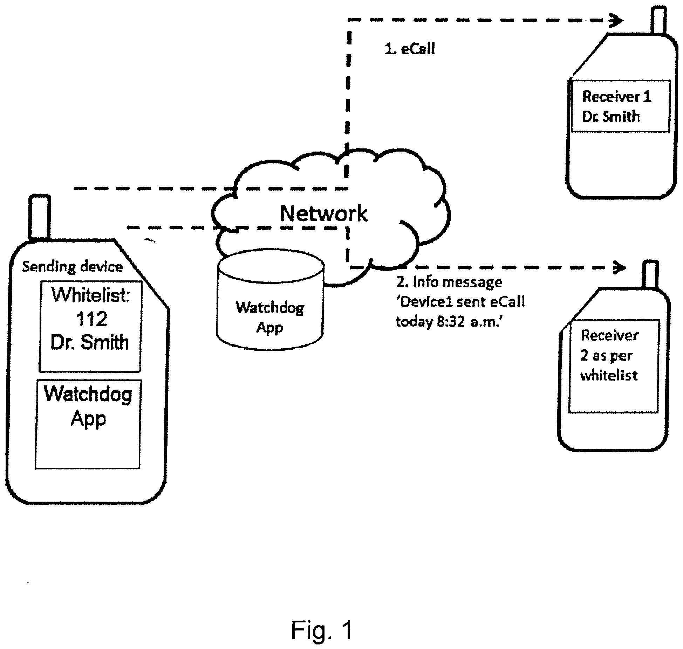

Fig. 1 zeigt auf der linken Seite ein mobiles Endgerät, aufweisend eine erste Liste von Kontaktadressen. Diese erste Liste ist beispielhaft als Whitelist bezeichnet. Hierbei ist auch eine Applikation installiert, vorliegend als Watch Dog-App bezeichnet, die auf dem mobilen Endgerät und/ oder auf einem entfernten Server installiert ist. Das mobile Endgerät ist mittels eines Netzwerks, wie es mittig angezeichnet ist, mit weiteren mobilen Endgeräten verbunden. Wird nunmehr ein Notruf mittels der Notrufnummer 112, also eine Kontaktadresse aus der ersten Liste, abgesetzt, so werden auch weitere Mobilfunkteilnehmer kontaktiert. Wie in der vorliegenden Fig. 1 oben angezeichnet ist, ist das der tatsächlich gewählte Notruf sowie weitere Teilnehmer, welche beliebig spezifiziert werden, wie es rechts unten gezeigt ist. Dies überwindet den Nachteil des Stands der Technik, dass beispielsweise in der Automobilindustrie bzw. bei einer Maschine-zu-Maschine-Kommunikation ein polizeilicher Notruf, z. B. ein eCall an 112, durch die Telematikeinheit zwar abgesetzt wird, es werden jedoch keine weiteren Empfänger, also Personen oder Systeme, über den Notruf informiert. In der Consumer-Technologie besteht dieser Nachteil ebenfalls, und insbesondere auch für Notrufe, die keine polizeilichen Notrufe sind bzw. keine ausgewiesenen Notrufe, also mit geringerer Priorität sind, wie beispielsweise der Hausarzt oder der Schlüsseldient, welche ebenfalls in der ersten Liste abgespeichert werden können.

Eine Watch-Dog-App vergleicht eine Blacklist mit Rufnummern und Telefonkontakten mit einer Whitelist mit Rufnummern, Telefonkontakten und dergleichen. Wird vom Endgerät bzw. vom Sicherheitselement ein Notruf, beispielsweise mittels Sprache, SMS oder Datenverbindung, abgesetzt, vergleicht danach die Watch Dog-Applikation die Notrufnummer mit der Blacklist. Stimmen diese überein, prüft Watch Dog-App, welche Whitelist-Einträge über den Notruf zu informieren sind und veranlasst deren Benachrichtigung.

Eine Watch-Dog-Applikation kann auf einem Endgerät bzw. Sicherheitselement oder einem oder mehreren Servern installiert sein. Die Watch-Dog-Applikation wird vom mobilen Endgerät bzw. Sicherheitselement informiert, wenn ein Notruf abgesetzt wurde. Somit kann die Watch-Dog-Applikation eine Blacklist und eine Whitelist führen. Die Watch-Dog-Applikation wird über Smartcard oder SIM-Application Toolkit Kommandos oder eine Benutzerschnittstelle verwaltet und kann in das lokale Kontaktfile integriert werden. Die Watch-Dog Benachrichtigung kann neben der gewählten Notrufnummer über Gesprächsbeginn und Gesprächsende, Standardinformation aus der SIM-Karte, MCC, Cell-ID oder dem Navigationssystem enthalten. Die Blacklist wie auch die Whitelist und die Applikation lassen sich über gängige Smartcard-Kommandos und SIM-OTA-Kommandos verwalten. Die Blacklist kann sowohl polizeiliche Notrufnummern oder auch individuelle Notrufnummern, z. B. ADAC, Krankenpflegedienst, private Sicherheitsdienste, führen, aber auch URLs, Webseiten bzw. Adressen. Die Blacklist kann individuell gestaltet werden und auch über OTA oder online verwaltet werden. Bei OTA handelt es sich um eine Over-the-Air-Schnittstelle, also eine drahtlose Schnittstelle. Einige Endgeräte in M2M bieten keine Telefonliste für Kontakteinträge, weshalb eine Blacklist erforderlich ist. Die Whitelist beinhaltet die Teilnehmerkontakte, die nach dem Notruf zu informieren sind. Der Ablauf kann derart sein, dass folgende Schritte ausgeführt werden:
1. Endgerät hat eine Telefonnummer angewählt, z. B. mittels eCall
2. Watch-Dog-App vergleicht gewählte Nummer mit Blacklist
3. Blacklist beinhaltet gerufene Telefonnummer aus Menüpunkt 1
4. Watch-Dog-App frägt Whitelist, an welche Kontaktadresse(n), also Telefonnummer oder E-Mail oder dergleichen, eine Information zu übersenden ist
5. Watch-Dog-App informiert Whitelist-Kontakte bzw. speichert Informationen für einen Gesamtreport ab, der z. B. monatlich erstellt werden kann.

Es soll eine Liste für sogenannte Notrufnummern geben, eine zweite für die zu informierenden Teilnehmer, also eine erste Liste und eine zweite Liste. Sofern das Endgerät eine Telefonnummer bzw. Kontaktliste bietet, wie es bei Smartphones typisch ist, kann die Blacklist entfallen. Jedoch kann die Blacklist auch URL- bzw. Website-Adressen führen, über deren Besuch die Whitelist zu informieren ist.
Die Watch-Dog-App benötigt Informationen aus dem Gerätemodul bzw. Modem über die gewählten Telefonnummern bzw. die besuchten URL-Adressen des Internetbrowsers. Die Watch-Dog-App kann auf dem Endgerät selbst, aber auch auf einem Remote-Server, also auf einem entfernten Server, wie einem Cloud-Server, liegen. Blacklist und Whitelist können auch auf der SIM bzw. dem Sicherheitselement gespeichert werden, was ein homogenes Remote-Management ermöglicht, beispielsweise über SIM-OTA, HTTPS und/ oder BIP. Alternativ kann dies auf dem Remote-Server erfolgen. Somit stellt sich der erfindungsgemäße Vorteil ein, dass ein Abgleichen der Telefonnummern und der jeweiligen Aktionen erfolgen kann. Beide Listen sind individuell programmierbar, also die Notrufnummern sowie die darauffolgenden Aktionen, und können mit weiteren Systemen vernetzt werden.

Gemäß einem weiteren Beispiel setzt das im KFZ verbaute eCall-System einen Notruf ab. Nur über die Watch-Dog-App wird die KFZ-Eigentümerin, eine KFZ-Leasinggesellschaft, von dem abgesetzten eCall und somit vom Unfall informiert.

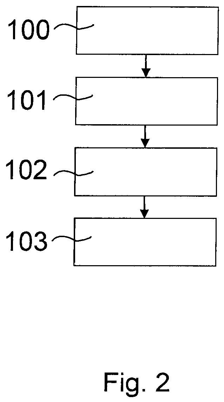

Fig. 2 zeigt in einem schematischen Ablaufdiagramm ein Verfahren zum Absetzen eines erweiterten Notrufs, mit den Schritten des Bereitstellens 100 einer ersten Liste und einer zweiten Liste, jeweils aufweisend Kontaktadressen, wobei jede Kontaktadresse aus der ersten Liste mit mindestens einer Kontaktadresse aus der zweiten Liste verknüpft 101 wird und eines Kontaktierens 102 der mindestens einen Kontaktadresse aus der zweiten Liste in Abhängigkeit eines Kontaktierens 103 der verknüpften Kontaktadresse aus der ersten Liste. Hierbei erkennt der Fachmann, dass die Verfahrensschritte teilweise iterativ und/ oder in anderer Reihenfolge ausgeführt werden können. So können beispielsweise die Verfahrensschritte des Kontaktierens 102, 103 in umgekehrter Reihenfolge ausgeführt werden.

Vorliegend nicht gezeigt ist ein Computerprogrammprodukt mit Steuerbefehlen, welche das Verfahren implementieren bzw. das Notrufsystem gemäß Fig. 1 betreiben.

## Patentansprüche

1. Verfahren zum Absetzen eines erweiterten Notrufs, mit den Schritten:
- Bereitstellen (100) einer ersten Liste und einer zweiten Liste jeweils aufweisend Kontaktadressen, **dadurch gekennzeichnet, dass** jede Kontaktadresse aus der ersten Liste mit mindestens einer Kontaktadresse aus der zweiten Liste verknüpft (101) wird; und
- Kontaktieren (102) der mindestens einen Kontaktadresse aus der zweiten Liste in Abhängigkeit eines Kontaktierens (103) der verknüpften Kontaktadresse aus der ersten Liste.

2. Verfahren nach Anspruch 1, **dadurch gekennzeichnet, dass** das Kontaktieren (102) der mindestens einen Kontaktadresse aus der zweiten Liste vor, während oder nach einem Kontaktieren der verknüpften Kontaktadresse aus der ersten Liste erfolgt.

3. Verfahren nach Anspruch 1 oder 2, **dadurch gekennzeichnet, dass** die Kontaktadressen jeweils als eine Telefonnummer, eine E-Mail Adresse, eine URL, eine IP-Adresse, eine Internetadresse, eine Endgeräteidentifikation, eine Teilnehmeridentifikation, eine Applikationsidentifikation, eine Anschrift und/ oder ein Synonym vorliegen.

4. Verfahren nach einem der vorhergehenden Ansprüche, **dadurch gekennzeichnet, dass** die erste Liste direkt oder indirekt auf einem mobilen Endgerät abgespeichert wird.

5. Verfahren nach einem der vorhergehenden Ansprüche, **dadurch gekennzeichnet, dass** die erste Liste von einem bezüglich eines kontaktierenden Endgeräts entfernten Anbieters bereitgestellt und/ oder gewartet wird.

6. Verfahren nach einem der vorhergehenden Ansprüche, **dadurch gekennzeichnet, dass** ein Kontaktieren ein Übersenden einer vorgefertigten Nachricht, ein Übersenden einer eingegebenen Nachricht, ein Übersenden eines Notrufsignals, ein Anrufen eines Teilnehmers, ein Aufrufen einer Internetadresse, ein Ausführen eines eCalls und/ oder eine Benachrichtigung mittels einer Kontaktadresse umfasst.

7. Verfahren nach einem der vorhergehenden Ansprüche, **dadurch gekennzeichnet, dass** bei dem Kontaktieren der Kontaktadresse aus der ersten Liste mittels eines Endgeräts ein entfernter Dienst in der zweiten Liste nachsieht, ob mit der ersten Kontaktadresse mindestens eine zweite Kontaktadresse in der zweiten Liste verknüpft ist.

8. Verfahren nach Anspruch 7, **dadurch gekennzeichnet, dass** der entfernte Dienst die mindestens eine verknüpfte Kontaktadresse aus der zweiten Liste kontaktiert.

9. Verfahren nach einem der vorhergehenden Ansprüche, **dadurch gekennzeichnet, dass** eine Verknüpfungsliste bereitgestellt wird, die beschreibt, wie auf ein Kontaktieren einer Kontaktadresse aus der ersten Liste ein Kontaktieren mindestens einer Kontaktadresse aus der zweiten Liste erfolgt.

10. Verfahren nach einem der vorhergehenden Ansprüche, **dadurch gekennzeichnet, dass** mit einem Kontaktieren einer Kontaktadresse ein Ausführen weiterer Steuerbefehle verknüpft ist.

11. Sicherheitselement mit Steuerbefehlen, welche das Verfahren gemäß einem der Ansprüche 1 bis 10 implementieren.

12. Sicherheitselement nach Anspruch 11, welches als eine UICC oder eine eUICC vorliegt.

13. Mobiles Endgerät zum Absetzen eines erweiterten Notrufs, mit:
- einer Bereitstellungseinheit eingerichtet zum Bereitstellen (100) einer ersten Liste und einer zweiten Liste jeweils aufweisend Kontaktadressen, **dadurch gekennzeichnet, dass** jede Kontaktadresse aus der ersten Liste mit mindestens einer Kontaktadresse aus der zweiten Liste verknüpft (101) wird; und
- einer Kontakteinheit eingerichtet zum Kontaktieren (102) der mindestens einen Kontaktadresse aus der zweiten Liste in Abhängigkeit eines Kontaktierens (103) der verknüpften Kontaktadresse aus der ersten Liste.

14. Notrufsystem zum Absetzen eines erweiterten Notrufs, mit:
- einer Bereitstellungseinheit eingerichtet zum Bereitstellen (100) einer ersten Liste und einer zweiten Liste jeweils aufweisend Kontaktadressen, **dadurch gekennzeichnet, dass** jede Kontaktadresse aus der ersten Liste mit mindestens einer Kontaktadresse aus der zweiten Liste verknüpft (101) ist; und
- einer Kontakteinheit eingerichtet zum Kontaktieren (102) der mindestens einen Kontaktadresse aus der zweiten Liste in Abhängigkeit eines Kontaktierens (103) der verknüpften Kontaktadresse aus der ersten Liste.

15. Computerprogrammprodukt mit Steuerbefehlen, welche das Verfahren gemäß einem der Ansprüche 1 bis 10 implementieren.
